# EUROPÄISCHE PATENTANMELDUNG

(11) **EP 4 550 630 A1**
(43) Veröffentlichungstag der Anmeldung: **07.05.2025**
(21) Anmeldenummer: 23207960.8
(22) Anmeldetag: 06.11.2023
(51) Int. Cl.: H02K 1/276, H02K 1/30

(54) **NACHHALTIGE FIXIERUNG VON PERMANENTMAGNETEN IN ROTOREN**

(71) Anmelder: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Plochmann, Bastian, 91413 Neustadt an der Aisch (DE); Warmuth, Matthias, 97618 Windshausen (DE)
(74) Vertreter: Siemens Patent Attorneys

(57) **Zusammenfassung**

Die Erfindung betrifft ein Verfahren zur Herstellung eines Rotors (9) mit vergrabenen Permanentmagneten (14) durch folgende Schritte:
- axiales Einsetzen von zumindest abschnittsweise kunststoffbeschichteten Permanentmagneten (14) nach Anspruch 1 oder 2 in axial verlaufene Ausnehmungen (13) eines aus axial geschichteten Blechen gebildeten Blechpakets (11) mit Wellenaufnahmeöffnung (31), welche Ausnehmungen (13) derart ausgerichtet sind, dass die Ausnehmungen (13) mit maximal möglichem Querschnitt vorliegen, um das Einsetzen der beschichteten Permanentmagneten (14) zu erleichtern,
- anschließendes Verwinden des Blechpakets um eine Achse (6) zur Fixierung der Permanentmagnete (14) in ihren Ausnehmungen, derart, dass die Bleche mit "Übermaß" in den Ausnehmungen (13) in die Beschichtung (26) der jeweiligen Permanentmagnete (14) eindringen, ohne den Permanentmagneten (14) zu erreichen.

## Beschreibung

Die Erfindung betrifft einen Permanentmagneten, ein Verfahren zur Herstellung eines Rotors mit derartigen Permanentmagneten und eine dynamoelektrische Maschine mit einem derartigen Rotor als auch eine Verwendung einer derartigen dynamoelektrischen Maschine.

Industrielle permanenterregte dynamoelektrische Maschinen, insbesondere Niederspannungsmotoren der Wirkungsgradklassen IE4 und höher, weisen üblicherweise Rotoren mit Permanentmagneten auf. Die Magnete werden in die hierfür vorgesehenen Magnettaschen, senkrecht zur Blechstapelung eingebracht. Diese Magnettaschen müssen hierbei ein Übermaß aufweisen, um das Einbringen der Magnete zu ermöglichen. Nach der Einbringung müssen die Magnete mit dem Rotorblechpaket fixiert werden, so dass kein Spiel vorliegt und mechanische Einwirkungen, wie Vibration oder Fliehkräfte / Magnetkräfte keine Positionsänderung der Magneten hervorrufen können.

Üblicherweise werden die Magnete hierfür mittels eines reaktiven Kunststoffklebers in die Magnettaschen geklebt. Hierfür gibt es mehrere Vorgehensweisen, welche üblicherweise angewandt werden. Dabei werden die Permanentmagnete an ihrer Außenfläche verklebt, so dass u.a. der Fügespalt Kleber aufweist.

So wird beispielsweise gemäß der DE 10 2012 215 084 A1 den Ausnehmungen des Blechpakets des Rotors Vergussmasse über zusätzliche Abdeckscheiben zugeführt.

Bei dieser Methode lässt sich zudem nicht vermeiden, dass die an den Seiten der Magnettaschen platzierten Flusssperren ebenfalls mit Kleber unwillkürlich befüllt werden, was zu einem erhöhtem, schwer kalkulierbarem Materialverbrauch des Klebers führt. Um die Verfestigung des Klebers zu beschleunigen, werden häufig thermische Prozesse, wie ein Aushärten im Ofen, nachgelagert. Des Weiteren ist nachteilig, dass diese derart gefertigten Rotoren nicht ohne weiteres recyclebar sind.

Aus der DE 10 2019 134 890 A1 ist das Einbringen der Magnete in rotierend verdrehte Einzelbleche bekannt, welche sich durch die Verdrehung leicht (mehrere 100 pm) öffnen und somit das Einbringen der Magnete ermöglichen. Im Anschluss werden die Bleche in den Zielzustand zurückrotiert, wodurch die Magnete durch die Einzelbleche mechanisch eingeklemmt und somit mechanisch fixiert werden.

Eine rein mechanische Lösung zum Fixieren von Magneten ist zwar aus Recycling-Gründen wünschenswert, da keine chemisch ausgehärtete Klebschicht vorhanden ist, welche in die Zwischenblechspalte kapilliert ist und somit eine Materialtrennung nur schwer mechanisch (Herausbrechen der Magnete) oder thermisch (Verbrennen des Kunststoffs, Entmagnetisierung des Magneten) möglich macht.

Das größte Problem beim mechanischen Fixieren der Magnete mittels einer Rotation oder einem Versatz der Einzelbleche ist jedoch die undefinierte mechanische Spannung auf die jeweiligen Bleche sowie vor allem auf den Magneten, bedingt durch Stanz- und Stapeltoleranzen der Bleche. Diese kann im schlimmsten Fall zu einem Magnetbruch führen oder generell die magnetischen Eigenschaften der Bleche aufgrund der Vorspannungen negativ beeinflussen.

Somit ist eine rein mechanische Fixierung, in der zwei Metalle aufeinandertreffen (Eisenblech auf Magnet) schwer realisierbar, da entweder der Anpressdruck zu gering gewählt werden könnte und somit die Gefahr eines Herausrutschens der Magnete besteht oder aber der Anpressdruck zu hoch gewählt wird, wodurch sich die magnetischen Blecheigenschaften aufgrund der mechanischen Spannung verschlechtern und im schlimmsten Fall der Magnet brechen könnte.

Ausgehend davon liegt der Erfindung die Aufgabe zugrunde, ein Verfahren zur Herstellung eines Rotors einer permanenterregten dynamoelektrischen Maschine bereitzustellen, das die oben genannten Nachteile vermeidet. Des Weiteren soll die permanenterregte dynamoelektrische Maschine eine vergleichsweise hohe Effizienzklasse aufweisen und in einfacher Art und Weise recycelbar sein.

Die Lösung der gestellten Aufgabe gelingt durch die Merkmalskombinationen der unabhängigen Ansprüche. Vorteilhafte Ausgestaltungen sind den davon abhängigen Ansprüchen zu entnehmen.

So weist der dem Herstellungsverfahren eines Rotors einer dynamoelektrischen Maschine, insbesondere einer permanenterregten Synchronmaschine, zugrunde gelegte Permanentmagnet, eine insbesondere quaderförmigen Grundstruktur auf, mit zwei zu Flusssperren weisenden gegenüberliegenden Seiten (Flusssperrenseiten), zwei zu Stirnseiten weisenden gegenüberliegenden Seiten (Stirnseiten) und zwei Magnetfeldseiten, wobei die Magnetfeldseiten und zumindest Abschnitte der Flusssperrenseiten und eine Beschichtung aufweisen.

Dieser erfindungsgemäße Permanentmagnet hat eine quaderförmige Grundstruktur mit sechs Seiten. Der Permanentmagnet kann dabei auch mit gekrümmten Seiten ausgeführt sein, ohne die quaderförmige Grundstruktur zu verlassen. Diese Seiten werden - auch anhand ihres späteren Einsatzes im Rotor - mit folgenden Bezeichnungen versehen. Als Flusssperrenseiten werden die einander gegenüberliegenden Seiten des Permanentmagneten bezeichnet, die im späteren Einsatz im Blechpaket des Rotors zu den Flusssperren weisen. Als Stirnseiten werden die einander gegenüberliegenden Seiten des Permanentmagneten bezeichnet, die im späteren Einsatz im Blechpaket des Rotors im Wesentlichen achsparallel ausgerichtet sind und zu den Stirnseiten des Blechpakets weisen. Als Magnetfeldseiten werden die einander gegenüberliegenden Seiten des Permanentmagneten bezeichnet, die im Wesentlichen zum Luftspalt bzw. zur Achse weisen und die im späteren Einsatz im Blechpaket des Rotors in einem Magnetfluss liegen.

Erfindungsgemäß werden die Permanentmagnete zumindest abschnittsweise (Magnetfeldseiten und Flusssperrenseiten) mit einer Kunststoffschicht versehen, welche auf die Permanentmagnete im Vorfeld aufgebracht wird. Diese Kunststoffschicht sollte im Bereich zwischen 10 µm und 200 µm Schichtdicke liegen und sollte größer als die Fertigungstoleranzen der Bleche sein, um einen direkten Kontakt von Blech und Permanentmagnet zu vermeiden. Des Weiteren sollte sie möglichst dünn sein, um den notwendigen Spalt zwischen Permanentmagnet und Blech nicht unnötig zu vergrößern.

Die Beschichtung kann dabei durchaus mit unterschiedlichen Dicken umgesetzt sein. Beispielsweise sind die Magnetfeldseiten etwas dicker ausgeführt als die Flusssperrenseiten. Dies hängt u.a. davon ab, wie die Ausnehmungen und damit die Permanentmagnete im Blechpaket angeordnet sind. Also z.B. als tangential angeordnete Permanentmagnete oder als V-förmig oder U-förmig angeordnete Permanentmagnete.

Die Beschichtung kann entweder aus einem duroplastischen Lack bestehen (z.B. Epoxy (Epoxidharz), PU (Polyurethan), PEI Polyethermid ein Hochtemperaturthermoplast), Acrylat z.B. lösemittelhaltig aufgesprüht und Raumtemperatur härtend), einem Elastomer, wie z.B. einem Polysiloxan oder einem thermoplastischen Material (z.B. Schmelzkleber PA (Polyamid), PO (Polyolefine), PEG (Polyethylenglycol)), genauso wie aus vorgefertigten Klebebändern, die diese Klebstoffe beinhaltend.

Das erfindungsgemäße Verfahren zur Herstellung eines Rotors mit vergrabenen Permanentmagneten geschieht nun durch folgende Schritte:
- zunächst erfolgt ein axiales Einsetzen der zumindest abschnittsweise kunststoffbeschichteten Permanentmagneten (wie oben ausgeführt) in axial verlaufende Ausnehmungen eines aus axial geschichteten Blechen gebildeten Blechpakets mit Wellenaufnahmeöffnung, welche Ausnehmungen derart ausgerichtet sind, dass die Ausnehmungen zunächst mit maximal möglichem Querschnitt vorliegen, um das Einsetzen der beschichteten Permanentmagneten zu erleichtern,
- daran schließt sich ein Verwinden des Blechpakets um eine Achse an, zur Fixierung der Permanentmagnete in ihren Ausnehmungen, derart, dass die Bleche mit "Übermaß" in den Ausnehmungen in die Beschichtung der jeweiligen Permanentmagnete eindringen, ohne den Permanentmagneten zu erreichen.

Diese Beschichtung dient im fertiggestellten Rotor als Egalisierungsvolumen für Stanz- und Stapeltoleranzen der jeweiligen Bleche des Blechpakets des Rotors., Dabei können nunmehr vor allem die Kanten der Einzelbleche mit Übermaß (also Bleche, die in die Ausnehmung ragen) während des später beschriebenen Herstellungsverfahren in die Kunststoffschicht eindringen und diese damit plastisch und/oder elastisch verformen. Dabei ist wichtig, dass der Kunststoff, unabhängig von der oben ausgeführten chemischen Beschaffenheit, nicht spröde ist, also eine gewisse Flexibilität aufweist.

Durch eine Verklebung einer Kunststoffschicht mit der vorgesehenen Oberfläche des Permanentmagneten, sowie durch die plastische Konturanpassung an die Einzelblechstruktur in der Ausnehmung ist ein vertikales Verrutschen der Permanentmagnete unmöglich.

Somit werden die Permanentmagnete in ihrer jeweiligen axial verlaufenden Ausnehmung ausreichend fixiert. Damit ist eine rein mechanische Fixierung, in der zwei Metalle aufeinandertreffen (Eisenblech auf Permanentmagnet) vermieden, bei der entweder der Anpressdruck der Bleche am Permanentmagnet zu gering ist, und somit die Gefahr eines Herausrutschens der Permanentmagnete besteht oder aber der Anpressdruck der Bleche am Permanentmagneten zu hoch ist, wodurch sich die magnetischen Blecheigenschaften aufgrund der mechanischen Spannung verschlechtern und im schlimmsten Fall der Permanentmagnet brechen kann.

Diese Beschichtung der Permanentmagnete ist reversibel. Die Verspannung bzw. das Verwinden des Blechpakets zur Fixierung der Permanentmagnete in ihren jeweiligen Ausnehmungen erfolgt maximal um die Dicke der Beschichtung.

Aufgrund unkalkulierbarer Blechspannungen auf den Permanentmagneten durch das Fügen der der Welle (aufgrund von Stanztoleranzen) wie auch oben bereits ausgeführt, wird diese reversible Beschichtung eingesetzt, um Magnetbruch zu verhindern.

Als Beschichtung für die jeweiligen Oberflächenabschnitte des Permanentmagneten eignen sich u.a. Klebebänder, Antirutschbänder, Kontaktklebstoff, die alle rückstandsfrei entfernt werden können und somit der Rotor in einfacher Art und Weise recyclebar hergestellt wurde.

Beispielsweise ist die Dicke der Beschichtung 200 µm während die Verwindung bzw. Verspannung maximal 150pm beträgt. Die Einzelbleche verklemmen sozusagen mit der elastischen Beschichtung und fixieren damit den Permanentmagneten in der Ausnehmung, insbesondere in seinen jeweiligen Aufnahmeabschnitten.

Adhäsion und Haftreibung fixieren somit den Permanentmagneten in der Ausnehmung, insbesondere in seinen jeweiligen Aufnahmeabschnitten.

Die Beschichtung ist rückstandsfrei von dem Blechpaket bzw. Permanentmagneten abziehbar und der Rotor somit recyclebar
Durch die Blechrotation beim Verwinden des Blechpakets zur Fixierung der Permanentmagnete kann gleichzeitig das Blechpaket auf einer Welle fixiert werden. Dabei sind an der Wellendurchtrittsöffnung des Blechpakets die überwiegende Anzahl der Einzelbleche mit einer oder mehreren Finnen ausgestattet.

Durch die Rotation - also das Verwinden des Blechpakets "kratzen" sich diese Finnen in die Welle.

Besonders vorteilhaft ist es, wenn diese Finnen im Vergleich zu einem anderen Blech oder pro Blech asymmetrisch bzgl. ihrer Form und/oder Länge ausgestaltet sind. Durch die erfindungsgemäß Rotation kratzen diese Finnen, somit auf der Welle eine Helix ein. Somit ist sowohl eine drehmomentsichere Verbindung von Blechpaket hergestellt - sowohl für Links- als auch Rechtslauf der Maschine als auch eine zuverlässige Fixierung der Permanentmagnete in den Ausnehmungen geschaffen.

Die Spitzen der der Finnen ragen beispielsweise mit ca. 100µm in den Wellenradius. Idealerweise weist jedes Blech erfindungsgemäße Finnen auf, um gleich Verhältnisse beim Verspannnen durch die verdrehte Anordnung des Blechpakets des Rotors zu erhalten.

Die Finnen fixieren das Blechpaket des Rotors auf der Welle für Rechts- und für Linkslauf des Rotors.

Bei einer unsymmetrischen Gestaltung der Finnen ist die Verdreh-Neigung in einer Richtung, idealerweise der VerdrehRichtung zum Einklemmen der Permanentmagnete, stärker ausgeprägt, was durchaus erwünscht sein kann.

Somit ist eine Verdreh-Vorspannung beim Fügen der Welle im Blechpaket des Rotors gegeben, wodurch die Permanentmagnete in die Taschen einspannt werden und sich die Bleche im Bereich der Magnettasche in die Beschichtung der Permanentmagnete eindrücken.

Der erfindungsgemäße Rotor, insbesondere mit seiner Welle ist damit relativ leicht herstellbar, ohne die Befürchtung haben zu müssen, dass die Permanentmagnete einer zu hohen mechanischen Belastung ausgesetzt sind. Des Weiteren lässt sich ein derartiger Rotor vergleichsweise einfach recyceln.

Die Erfindung sowie weitere vorteilhafte Ausgestaltungen der Erfindung werden anhand prinzipiell dargestellter Ausführungsbeispiele näher erläutert, darin zeigen:
- FIG 1: einen prinzipiellen Längsschnitt einer dynamoelektrischen Maschine,
- FIG 2, 3: einen prinzipiellen Verfahrensschritt bei der Fixierung von Permanentmagneten,
- FIG 4: Ausnehmung mit einem Permanentmagneten,
- FIG 5: Darstellung der Problematik im Stand der Technik,
- FIG 6: beschichteter Permanentmagnet,
- FIG 7: Ausnehmung mit einem beschichteten Permanentmagneten,
- FIG 8: erfindungsgemäße Fixierung eines Permanentmagneten in einer Ausnehmung,
- FIG 9: einen prinzipiellen Verfahrensschritt bei der Fixierung von Permanentmagneten mit zusätzlicher Fixierung des Blechpakets auf einer Welle,
- FIG 10: prinzipielle Darstellung des Verwindens des Blechpakets,
- FIG 11: Darstellung der Fixierung des Blechpakets auf der Welle,
- FIG 12: Permanentmagnet,
- FIG 13: Pol eines Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Achse 6 des Rotors 9 und damit auf die entsprechende Symmetrieachse des Stators 8. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse 6 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 9 und Stator 8, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

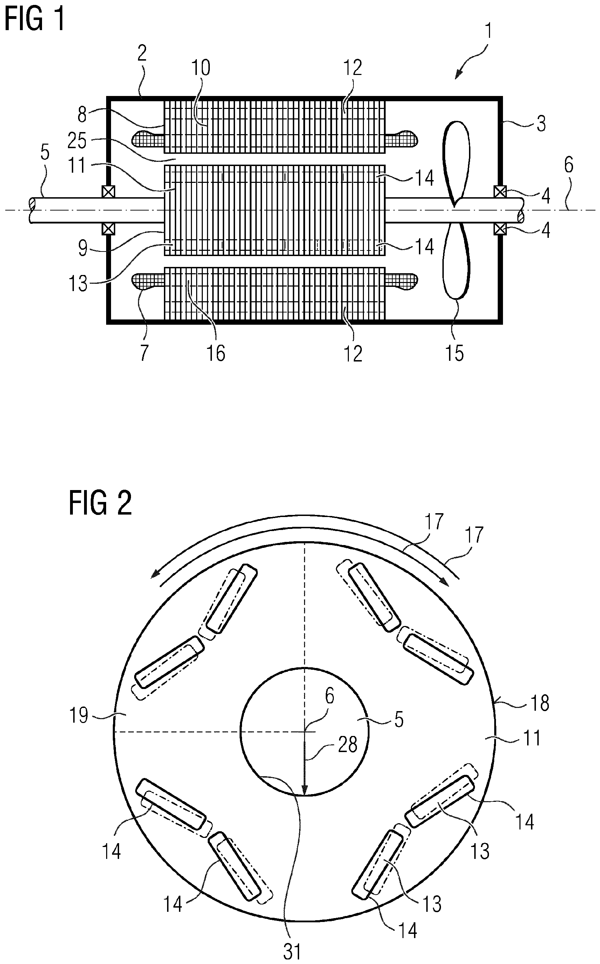

FIG 1 zeigt einen prinzipiellen Längsschnitt einer dynamoelektrischen Maschine 1. Ein Stator 8, mit einem, in im Wesentlichen axial verlaufenden Nuten 16 angeordneten Wicklungssystem 7, ist in diesem Beispiel in einem Gehäuse 2 angeordnet. Über Lagerschilde stützt sich das Gehäuse 2 mittels Lager 4 auf einer Welle 5 ab. Durch einen Luftspalt 25 vom Stator 8 beabstandet, ist ein Rotor 9 vorgesehen, der in im Wesentlichen axial verlaufenden Ausnehmungen 13 Permanentmagnete 14 aufweist. Sowohl die Blechpakete 10, 11 von Stator 8 und Rotor 9 können optional axial verlaufende Kühlkanäle aufweisen, um auf diese Weise einen geschlossenen Innenkühlkreislauf innerhalb des Gehäuses 2 zu ermöglichen. Bei Bestromung des Wicklungssystems 7 des Stators 8 wird durch elektromagnetische Wechselwirkung mit dem Rotor 9 die Welle 5 um eine Achse 6 in Drehung versetzt. Diese Drehung bewirkt einen Antrieb einer nicht dargestellten Arbeitsmaschine und eines Eigenlüfters 15 in dem Gehäuse 2.

FIG 2 zeigt prinzipiell, wie sich bei einer Verwindung des Blechpakets 11 des Rotors 9 eine Verengung des axial verlaufenden Ausnehmung 13 einstellt, die zu einer Fixierung der Permanentmagneten 14 in der jeweiligen Ausnehmung 13 führt.

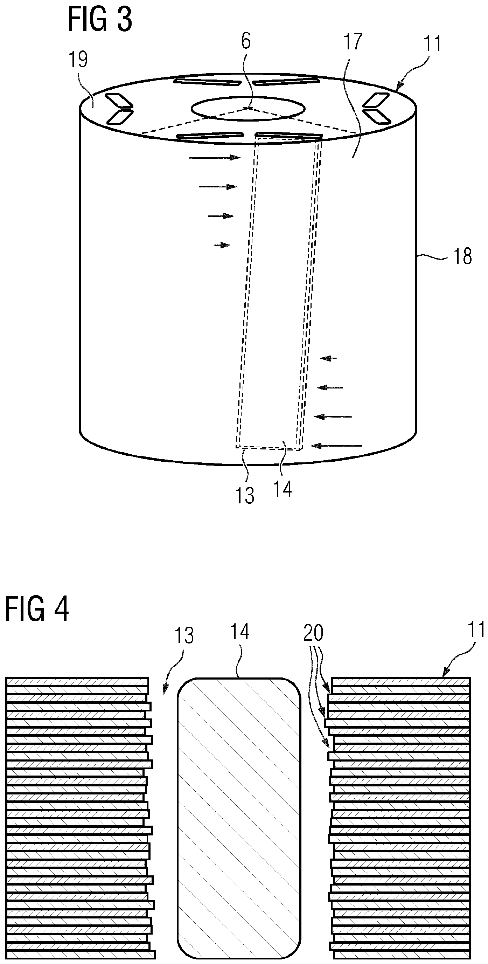

FIG 3 zeigt diesen Sachverhalt in einer perspektivischen Darstellung.

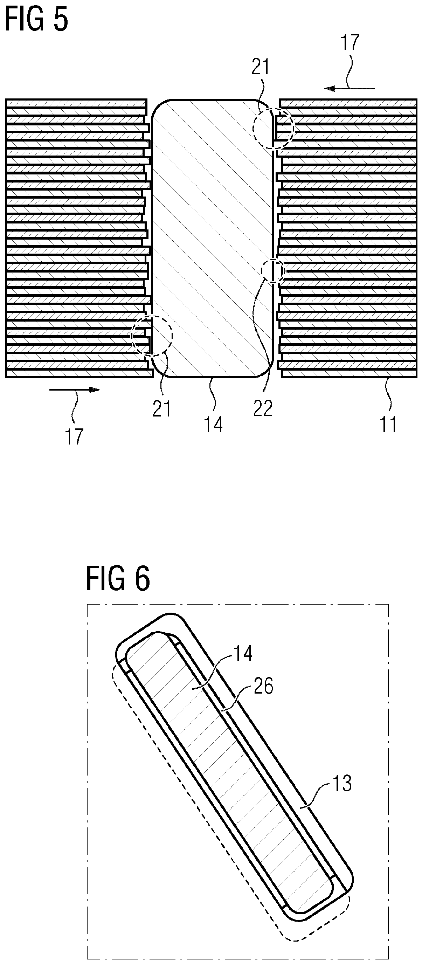

FIG 4 zeigt die Ausnehmung 13 in der gemäß Stand der Technik ein Permanentmagnet 14 eingesetzt ist. Durch technisch bedingte Toleranzen bei der Stanzung und Paketierung der Bleche zu einem Blechpakets 11 stellt sich gemäß FIG 5 eine Verengung der Ausnehmung 13 ein, die bei einer Verdrehung des Blechpakets 11 zu punktuellen Überlastungen 21 am Permanentmagnet 14 führt.

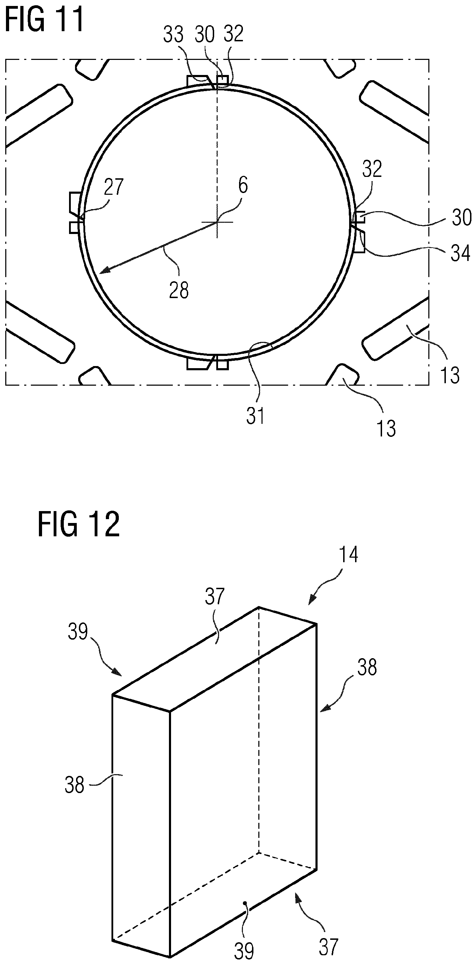

Dabei weist nunmehr ein erfindungsgemäßer Permanentmagnet 14, mit einer quaderförmigen Grundstruktur, folgende Seiten auf. Der Permanentmagnet 14 hat gemäß FIG 12 eine quaderförmige Grundstruktur mit sechs Seiten. Als Flusssperrenseiten 37 werden die einander gegenüberliegenden Seiten des Permanentmagneten 14 bezeichnet, die im späteren Einsatz im Blechpaket 11 des Rotors 9 zu den Flusssperren 35 weisen. Als Stirnseiten 38 werden die einander gegenüberliegenden Seiten des Permanentmagneten 14 bezeichnet, die im späteren Einsatz im Blechpaket 11 des Rotors 9 mit ihren Normalenvektoren achsparallel ausgerichtet sind und zu den Stirnseiten des Blechpakets 11 weisen. Als Magnetfeldseiten 39 werden die einander gegenüberliegenden Seiten des Permanentmagneten 14 bezeichnet, die in Richtung Luftspalt 25 oder Richtung Achse 6 ausgerichtet sind und die im späteren Einsatz im Blechpaket 11 des Rotors 9 senkrecht in einem Magnetfluss liegen.

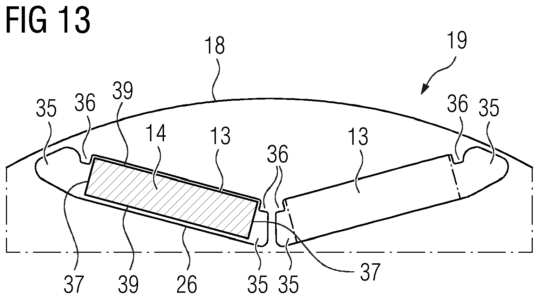

Die Ausnehmungen 13 selbst setzen sich, wie FIG 13 zeigt, aus den Aufnahmeabschnitten der Permanentmagnete 14 und den Flusssperren 35 und optimalen Halteelementen 36 zusammen. Ebenso kann jeder Pol 19 mehrere Ausnehmungen 13 aufweisen, die beispielsweise in V-Anordnungen, U-Anordnungen oder Doppel-V-Anordnungen ausgeführt sind.

Die Permanentmagnete 14 können gemäß diesem Verfahren magnetisiert, teilmagnetisiert oder unmagnetisiert in die Aufnahmeabschnitte eingeschoben werden und dann später ggf. komplett aufmagnetisiert werden.

Gemäß FIG 6 weisen erfindungsgemäß nunmehr die Permanentmagnete 14 insbesondere in den Bereichen der Magnetfeldseiten 39 und zumindest Abschnitten der Flusssperrenseiten 37 eine Beschichtung 26 auf.

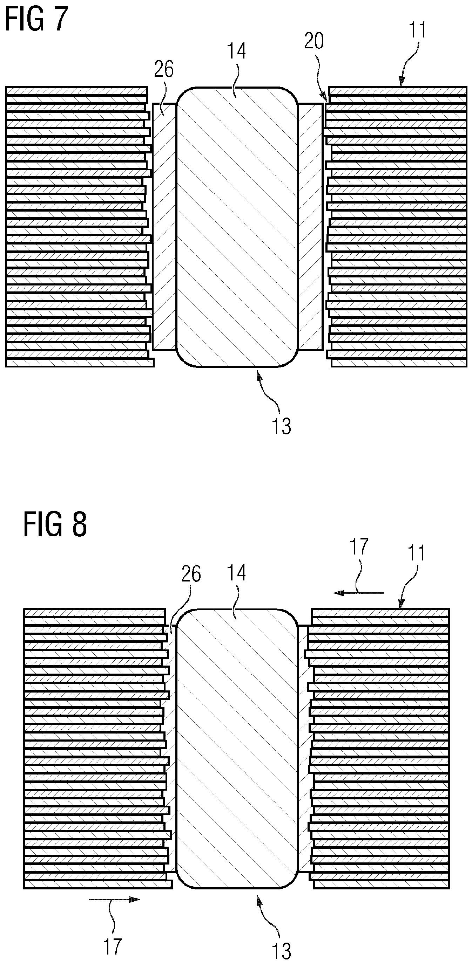

Nach FIG 7 werden diese beschichteten Permanentmagnete 14 in die Aufnahmeabschnitte der Ausnehmungen 13 eingesetzt.

Durch Verwinden des Blechpakets 11 dringen nunmehr die Bleche mit einer "+ Toleranz" (also Übermaß) in die Beschichtung 26 ein, ohne jedoch direkten Kontakt mit dem Permanentmagneten 14 zu erhalten. Damit sind punktuell Überbelastungen 21 vermieden.

Durch Gestaltung der Wellenaufnahmeöffnung 31 wenigstens einiger Bleche des Blechpakets 11 (idealerweise aller Bleche des Blechpakets 11) mit erfindungsgemäßen, insbesondere asymmetrischen Finnen 27 lässt sich insbesondere auch durch das Verwinden auch eine drehmomentenfeste Verbindung von Blechpaket 11 und Welle 5 schaffen.

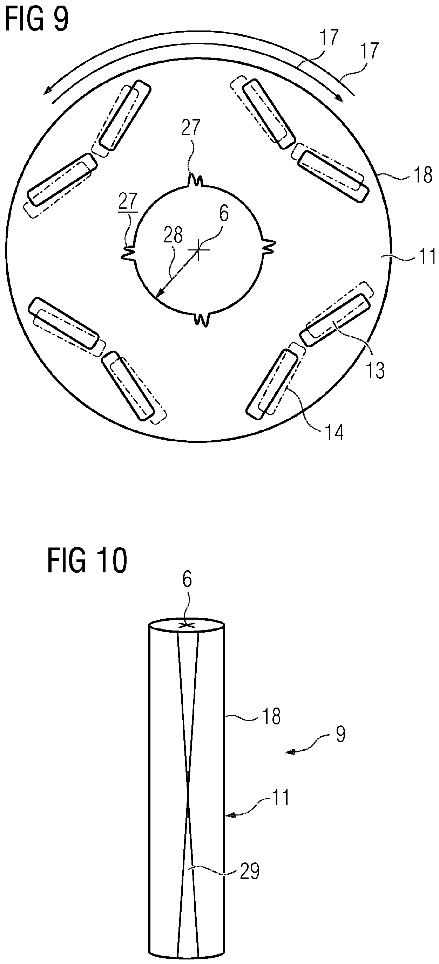

Dies zeigt sich beispielsweise am Verlauf einer Position der hintereinanderliegenden verdrehten Finnen 27 an der Welle 5 gemäß FIG 10.

FIG 11 zeigt an einem Beispiel eines Bleches vier verteilt angeordnete Finnen 27 die zur Wellendurchgangsöffnung 31 weisen. Dabei sind paarweise gegenüberliegenden Finnen 27 gleich ausgebildet, so dass eine drehmomentfeste Verbindung von Welle 5 mit dem Blechpaket 11 für Links- und Rechtslauf der dynamoelektrischen Maschine 1 vorliegt.

Eine Finne 27 ist dabei in einer Ausstanzung eines Einzelbleches vorgesehen, die zu der Wellendurchtrittsöffnung 31 weist. Die Finnen 27 ragen radial in den Wellenradius 28, um sich bei dem axialen oder axialem und verwindenden Fügen von Welle 5 und Blechpakets 11 in die Welle 5 zu "kratzen".

Als asymmetrische Ausgestaltung wird insbesondere die Form der Finne 27 im Vergleich zu einer benachbarten Finne des gleichen Blechs oder eines benachbarten Blechs bezeichnet.

Dabei hat jede Finne 27 eine radial verlaufende Kante 32 und je nach dem eine nach links ausgerichtete Seite 33 oder eine nach rechts ausgerichtete Seite 34.

FIG 13 zeigt die Ausbildung eins beispielhaften Pols 19 des Rotors 9, mit V-förmig angeordneten Permanentmagneten 14. Dieser Pol 19 weist zwei einander zugeneigte Ausnehmungen 13 auf, wobei der Aufnahmebereich der Permanentmagneten 14 durch Flusssperren flankiert ist. Der Permanentmagnet 14 liegt vorzugsweise an der radial äußeren Seite - also der dem Luftspalt zugewandten Seite direkt mit seiner Beschichtung an.

Die Permanentmagnete 14 (Luftspaltseite 23) liegen vorteilhafterweise an der Außenseite - also Richtung Luftspalt 25 - der Ausnehmung 13 direkt an.

Dabei wird unter direkter Anlage verstanden, dass die Permanentmagnete 14 mit ihrer Beschichtung 26 direkt am Blech anliegen - lediglich geringe Unebenheiten im pm-Bereich sind vorhanden.

Derartige Rotoren 9 werden vor allem in dynamoelektrischen Maschinen 1, wie beispielsweise permanenterregten Synchronmaschinen eingesetzt, die vor allem im industriellen Umfeld betrieben werden. Dabei sind sie als Antriebe von Pumpen, Lüfter, Verdichter, Kompressoren, Rollgängen, Förderanlagen vorgesehen, die eine sehr lange kontinuierliche Betriebsdauer aufweisen. Derartige dynamoelektrischen Maschinen 1 sind auch bei Traktionsantrieben wie Miningfahrzeugen, E-Bussen, Straßenbahnen oder Zügen einsetzbar.

Grundsätzlich sind derartige dynamoelektrischen Maschinen 1 als Motoren oder Generatoren einsetzbar.

## Patentansprüche

1. Permanentmagnet (14) mit einer, insbesondere quaderförmigen Grundstruktur für einen Rotor (9) einer dynamoelektrischen Maschine (1), insbesondere einer permanenterregten Synchronmaschine,
mit zwei zu Flusssperren weisenden gegenüberliegenden Seiten (Flusssperrenseiten (37)), zwei zu Stirnseiten weisenden gegenüberliegenden Seiten (Stirnseiten (38)) und zwei Magnetfeldseiten (39),
wobei die Magnetfeldseiten (39) und zumindest Abschnitte der Flusssperrenseiten (37) eine Beschichtung aufweisen.

2. Permanentmagnet (14) mit einer, insbesondere quaderförmigen Grundstruktur für einen Rotor (9) einer dynamoelektrischen Maschine (1), insbesondere einer permanenterregten Synchronmaschine, nach Anspruch 1, **dadurch gekennzeichnet, dass** die Dicke der Beschichtung an Magnetfeldseiten (39) und Flusssperrenseiten (37) unterschiedlich ist.

3. Verfahren zur Herstellung eines Rotors (9) mit vergrabenen Permanentmagneten (14) durch folgende Schritte:
- axiales Einsetzen von zumindest abschnittsweise kunststoffbeschichteten Permanentmagneten (14) nach Anspruch 1 oder 2 in axial verlaufene Ausnehmungen (13) eines aus axial geschichteten Blechen gebildeten Blechpakets (11) mit Wellenaufnahmeöffnung (31), welche Ausnehmungen (13) derart ausgerichtet sind, dass die Ausnehmungen (13) mit maximal möglichem Querschnitt vorliegen, um das Einsetzen der beschichteten Permanentmagneten (14) zu erleichtern,
- anschließendes Verwinden des Blechpakets (11) um eine Achse (6) zur Fixierung der Permanentmagnete (14) in ihren Ausnehmungen, derart, dass die Bleche mit "Übermaß" in den Ausnehmungen (13) in die Beschichtung (26) der jeweiligen Permanentmagnete (14) eindringen, ohne den Permanentmagneten (14) zu erreichen.

4. Verfahren zur Herstellung eines Rotors (9) mit vergrabenen Permanentmagneten (14) nach Anspruch 3, **dadurch gekennzeichnet, dass** die zumindest einzelne Bleche des Blechpakets (11) in Richtung Wellenaufnahmeöffnungen (31) mit Finnen (27) versehen sind, die in den Wellenradius (28) ragen.

5. Verfahren zur Herstellung eines Rotors (9) mit vergrabenen Permanentmagneten (14) nach Anspruch 4, **dadurch gekennzeichnet, dass** diese Finnen (27) asymmetrisch ausgebildet, insbesondere gestanzt sind, um sich beim Verwinden in jeder Drehrichtung mit einer Welle (5) formschlüssig zu fixieren.

6. Verfahren zur Herstellung eines Rotors (9) mit vergrabenen Permanentmagneten (14) nach einem der Ansprüche 3 bis 5,
**dadurch gekennzeichnet, dass** das Verdrehen/Verwinden des Blechpakets (11) zum Fixieren der Permanentmagnete (14) derart erfolgt, dass stirnseitig oder in der Mitte des Blechpakets (11) der Knoten - also keine Verdrehung gegenüber ursprünglichem Zustand bzw. Position des Bleches oder der Bleche vorliegt.

7. Rotor (9) einer dynamoelektrischen Maschine (1), insbesondere einer permanenterregten Synchronmaschine, mit vergrabenen Permanentmagneten (14), wobei zumindest einzelne Randabschnitte der die Aufnahmeabschnitte bildenden Bleche der Permanentmagnete (14) in eine Beschichtung der Permanentmagnete (14) eingedrungen sind.

8. Dynamoelektrische Maschine (1) mit einem Rotor (9) nach Anspruch 7 zur Verwendung im industriellen Umfeld als Antriebe von Pumpen, Lüfter, Verdichter, Kompressoren, Rollgängen, Förderanlagen, als auch bei Traktionsantrieben wie Miningfahrzeugen, E-Bussen, Straßenbahnen oder Zügen, wobei die dynamoelektrische Maschine (1) als Motoren oder Generatoren einsetzbar ist.
